# EUROPÄISCHE PATENTSCHRIFT

(11) **EP 0 945 973 B1**
(45) Veröffentlichungstag und Bekanntmachung des Hinweises auf die Patenterteilung: **26.06.2002**
(21) Anmeldenummer: 99105656.5
(22) Anmeldetag: 19.03.1999
(51) Int. Cl.: H02P 1/46

(54) **Vorrichtung zum Steuern eines Einphasen-Synchronmotors**
Control device for a single phase synchronous motor
Dispositif de commande pour un moteur synchrone monophase

(30) Priorität: 25.03.1998 DE 19813095
(43) Veröffentlichungstag der Anmeldung: 29.09.1999
(73) Patentinhaber: Diehl AKO Stiftung & Co. KG, 88239 Wangen im Allgäu (DE)
(72) Erfinder: Zeh, Stefan, Dipl.-Ing., 88239 Wangen (DE)
(74) Vertreter: Hofmann, Gerhard, Dipl.-Ing. Patentassessor

(56) Entgegenhaltungen:
- EP-A- 0 654 890
- EP-A- 0 666 639
- EP-A- 0 682 404
- DE-A- 3 638 440
- FR-A- 2 653 613
- PATENT ABSTRACTS OF JAPAN vol. 011, no. 088 (E-490), 18. März 1987 (1987-03-18) & JP 61 240868 A (MATSUSHITA SEIKO CO LTD), 27. Oktober 1986 (1986-10-27)

## Beschreibung

Die Erfindung betrifft eine Vorrichtung zum Steuern des Anlaufs und des Betriebs eines nicht selbstanlaufenden Einphasen-Synchronmotors, dessen mindestens eine Statorwicklung über einen von einer Steuerelektronik gesteuerten Schalter an die Wechselspannung eines Netzes schaltbar ist.

Eine derartige Einrichtung ist zum Starten eines Einphasen-Synchronmotors nötig, der aufgrund seiner vergleichsweisen hohen Leistung, beispielsweise >50 W, bauartbedingt beim Anlegen der Wechselspannung des Netzes nicht von selbst anläuft und der in einer bestimmten Drehrichtung anlaufen soll. Solche Synchronmotoren werden beispielsweise bei Haushaltsmaschinen, insbesondere für Wasserpumpen für Geschirrspülmaschinen, verwendet.

Eine Vorrichtung der eingangs genannten Art ist aus der EP 0 654 890 B1 bekannt. Dort ist zur Erfassung der jeweiligen Stellung des Rotors ein Stellungssensor nötig, der beispielsweise ein Hallsensor ist. In Abhängigkeit vom Sensorsignal und der jeweiligen Polarität der Wechselspannung wird der Schalter (Triac) gezündet, wenn der auf der geschalteten Wechselspannung beruhende Strom bei der jeweiligen Ausrichtung des Magnetfeldes des Rotors ein Drehmoment in Richtung der gewünschten Drehrichtung ergibt.

Ein Stellungssensor ist im Hinblick auf den Aufbau und die Montage aufwendig. Er muß im Motor integriert sein und mit der Steuerelektronik verbunden werden.

Weitere Vorrichtungen der eingangs genannten Art, die ebenfalls mit Stellungssensoren arbeiten, sind aus der EP 0 574 823 A2, der EP 0 682 404 A2, der DE 195 33 344 A1 bekannt.

In der EP 0 691 732 B1 ist ein Wechselrichter für einen Einphasen-Synchronmotor beschrieben, der beispielsweise für den Pumpenantrieb in einem Geschirrspüler verwendbar ist.

Aus der DE 40 33 121 A1 ist eine Vorrichtung zum Starten eines elektrischen Einphasen-Synchronmotors bekannt, der nur für vergleichsweise kleine Leistungen ausgelegt ist und dabei selbstanlaufend ist. Die DE 40 33 121 A1 beschreibt eine Möglichkeit, einen Synchronmotor in gewünschter Drehrichtung ohne mechanische Rücklaufsperre zu starten. Für nicht selbstanlaufende Synchronmotoren ist die Vorrichtung nach der DE 40 33 121 A1 ungeeignet, da solche aufgrund ihrer Massenträgheit nicht auf Solldrehzahl beschleunigt werden könnten und mit kleinen Hin- und Herbewegungen mit Netzfrequenz stehenblieben.

In der EP 0 495 611 A2 ist eine Vorrichtung zum Starten eines 3-phasigen Motors für eine Magnetplatte beschrieben. Nur zur Steuerung der Solldrehzahl wird die in den Wicklungen induzierte Spannung bzw. die elektromotorische Kraft ausgewertet.

Aus der DE 44 18 721 A1 ist ein Steuerungsverfahren für eine Laugenumwälzpumpe einer Geschirrspülmaschine bekannt. Es soll das kontinuierliche Fördern der nicht selbstansaugenden Pumpe überwacht werden. Drehzahlschwankungen sowie Schwankungen des Motorstroms werden zur Beeinflussung des Programmablaufs verarbeitet.

Aufgabe der Erfindung ist es, eine Vorrichtung der eingangs genannten Art vorzuschlagen, mit der ein an sich nicht selbstanlaufender Einphasen-Synchronmotor in richtiger Drehrichtung startbar ist, ohne daß ein Sensor nötig ist, der die Lage des Rotors erfaßt.

Erfindungsgemäß ist obige Aufgabe durch die Merkmale des kennzeichnenden Teils des Anspruchs 1 gelöst.

Die Vorrichtung veranlaßt beim Einschalten wenigstens folgende drei Vorgänge:
a) zunächst wird der Rotor, der keine Totpunktstellung annehmen kann, aus einer seiner Stillstandsstellungen durch Spannungspulse der einen Polarität in eine bestimmte Startposition gebracht;
b) anschließend wird der Rotor durch Spannungspulse der entgegengesetzten Polarität in der jeweiligen Drehrichtung in Drehung versetzt;
c) dann wird der Rotor zum Hochlaufen auf Synchrondrehzahl dadurch gebracht, daß in Abhängigkeit von der in stromlosen Zuständen der Statorwicklung erfaßte, auf dem trägheitsbedingten Nachlaufen des Rotors beruhende induzierten Spannung jeweils in den Netzhalbwellen derart angesteuert wird, daß ein Drehmoment in der gewünschten Drehrichtung entsteht.

Ein Drehmoment in der gewünschten Drehrichtung entsteht dann, wenn die induzierte Spannung und die jeweilige Netzhalbwelle bzw. der entsprechende Strom die gleiche Polarität haben. Es kann auch von der Steuerelektronik die Steigung der induzierten Spannung (EMK) ausgewertet werden, um das Hochlaufen des Motors auf Synchrondrehzahl zu vergleichmäßigen.

Durch die Erfassung der induzierten Spannung (EMK) ist es auch möglich, weitere Betriebszustände, insbesondere Störungen, auszuwerten. Hierauf beziehen sich Unteransprüche.

Ein Ausführungsbeispiel der Erfindung ergibt sich aus der folgenden Beschreibung. In der Zeichnung zeigen:

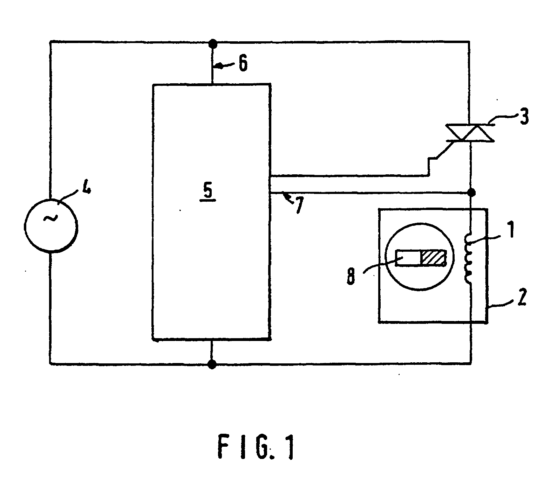

Figur 1 ein Blockschaltbild,
Figur 2 schematisch Rotorpositionen a bis e des Motors,
Figur 3 ein Strom-Spannungsdiagramm mit der Netzwechselspannung U (durchgezogene Linie), dem Motorstrom I (strichlierte Linie) und der EMK E (punktierte Linie) und
Figur 4 das Strom-Spannungsdiagramm der Figur 3 ergänzt um die an der Statorwicklung meßbare Spannung Um.

Ein Einphasen-Synchronmotor 2, der beispielsweise dem Antrieb einer Wasserpumpe einer Spülmaschine dient, weist eine Statorwicklung 1 auf, die über einen elektronischen Schalter 3, insbesondere Triac oder optisch triggerbarer Triac, an das Wechselstromnetz 4 schaltbar ist. Den Schalter 3 steuert eine Steuerelektronik 5, die beispielsweise mit einem Mikroprozessor bzw. Mikrocontroller arbeitet und Teil einer Programmsteuer-Einrichtung sein kann.

Die Steuerelektronik 5 wertet über einen Eingang 6 die jeweilige Polarität der jeweiligen Netzhalbwellen und über einen Eingang 7 die an der Statorwicklung 1 abfallende Spannung Um bzw. E folgendermaßen aus:

Wenn der Schalter 3 sperrt, ist der Motorstrom I gleich Null. Der permanentmagnetische Rotor 8 bleibt dabei nicht sofort stehen, sondern dreht aufgrund seiner Massenträgheit weiter, wodurch in die Statorwicklung 1 eine Spannung entsprechend der EMK induziert wird. Zumindest deren Polarität wird von der Steuerelektronik 5 ausgewertet.

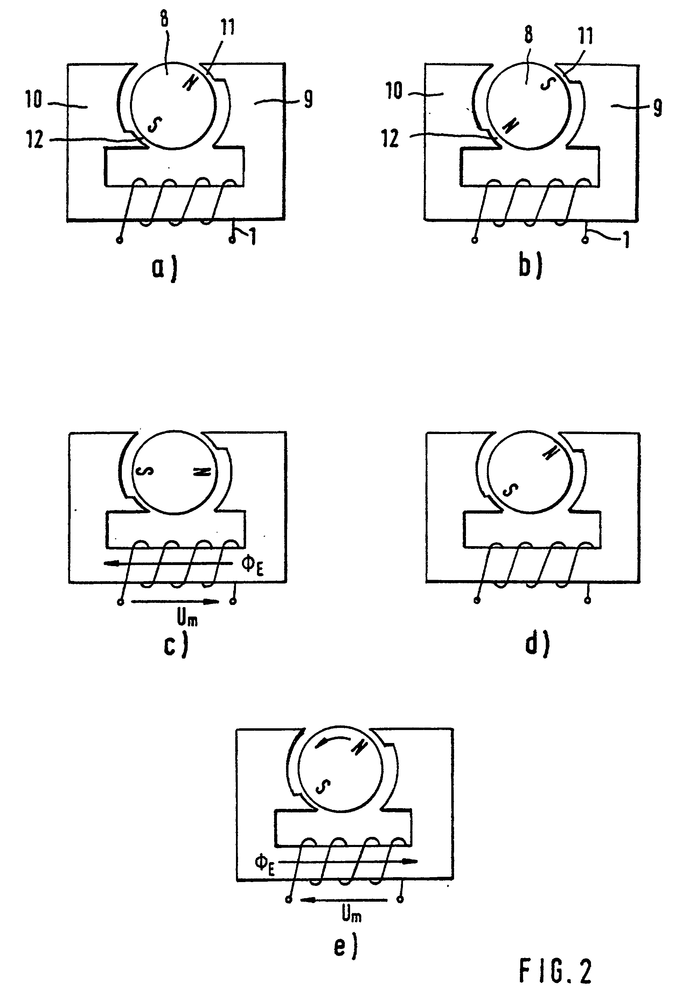

Der Motor 2 weist Ständerpole 9,10 auf, welche unsymmetrische Luftspaltverengungen 11,12 bilden (vgl. Fig.2). Der Rotor 8 kann dadurch im unbestromten Zustand der Statorwicklung 1 wegen der Reluktanzmomente nur die eine oder die andere Ruheposition (vgl. Fig.2a oder Fig.2b), jedoch keine Totpunktstellung, annehmen.

In der Ruheposition a liegt der Nordpol N des Rotors 8 bei der Luftspaltverengung 11. In der Ruheposition b liegt der Südpol S des Rotors 8 bei der Luftspaltverengung 11. Die beiden möglichen Ruhepositionen machen die Anlauf-Drehrichtung des Rotors 8 unsicher. Wie eine definierte Startposition des Rotors 8 erreicht wird, ist anhand von Figur 2 beschrieben.

Die gewünschte Startposition zeigt Figur 2d. An die Statorwicklung 1 wird wenigstens ein Spannungspuls der einen, beispielsweise negativen, Polarität gelegt. Steht der Rotor 8 dabei in der Ruheposition a, dann dreht er infolge des Spannungspulses um etwa 45° in die Stellung der Figur 2c. Im dann anschließenden stromlosen Zustand der Statorwicklung 1 schwenkt der Rotor 8 wieder um etwa 45° zurück (vgl. Fig.2d). An der Stellung a hat sich also im Endergebnis nichts geändert, was sachgerecht ist, weil die Ruheposition a und die Startposition d gleich sind.

Steht jedoch der Rotor 8 in der Ruheposition b, dann dreht er infolge des genannten Spannungspulses um etwa 135° in die Stellung der Figur 2c. Im dann anschließenden stromlosen Zustand der Statorwicklung 1 schwenkt der Nordpol N - um etwa 45° - zur Luftspaltverengung 11. Es ist damit der Rotor 8 aus der Ruheposition b in die Startposition d gebracht.

Um dann anschließend den Motor 2 zu starten, werden Spannungspulse der anderen, im Beispielsfalle positiven, Polarität an die Statorwicklung 1 gelegt, wodurch der Rotor 8 in Richtung des Pfeiles der Figur 2e anläuft.

Die Spannungspulse, die zum Erreichen der Startposition angelegt werden, müssen keine ganzen Halbwellen sein. Um eine Demagnetisierung des Rotors zu vermeiden, werden nur angeschnittene Halbwellen angelegt.

Mehrere Spannungspulse anzulegen, erhöht die Sicherheit des Erreichens der Startposition (vgl. Fig.2d). Die ersten Spannungspulse können eine kleinere Amplitude haben als folgende Spannungspulse, damit es nicht zu einem Überlaufen der Startposition kommt, was speziell aus der Ruheposition b der Fall sein könnte.

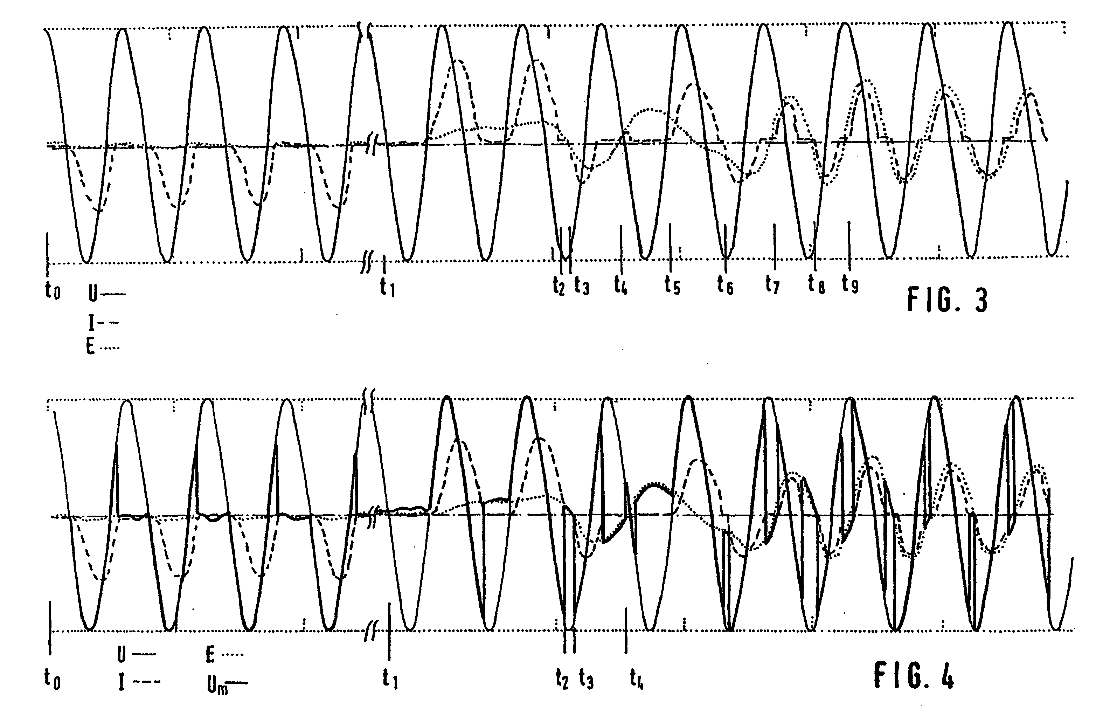

Die genannten Spannungspulse werden von der Steuerelektronik 5 über den Schalter 3 angelegt. Die Figuren 3 und 4 zeigen Strom- und Spannungsdiagramme für das Einstellen der Startposition, das Starten und den Hochlauf des Motors 2 auf Synchrondrehzahl.

Zu einem Zeitpunkt t0 erhält die Steuerelektronik 5, beispielsweise von einer Programmsteuereinrichtung, einen Befehl zum Einschalten des Motors 2. Daraufhin wird bei negativen Halbwellen der Schalter 3, speziell Triac, gezündet. Damit ergeben sich in der Statorwicklung 1 Stromimpulse negativer Polarität, durch die der Rotor 8 in der oben beschriebenen Weise in seine Startposition gebracht wird. In den Figuren 3 und 4 sind vier solche Stromimpulse gezeigt. Es können jedoch auch mehr oder weniger Stromimpulse geschaltet werden. Jedenfalls werden so viele Stromimpulse geschaltet, daß das Erreichen der Startposition (vgl. Fig.2d) sicher ist.

Ab einem späteren Zeitpunkt t1 wird der Motor 2 gestartet. Hierzu werden mittels des Schalters 3 mehrere Netzhalbwellen oder angeschnittene Netzhalbwellen der anderen Polarität, im Beispielsfalle also positive Netzhalbwellen, auf die Statorwicklung 1 geschaltet. Der Rotor 8 beginnt nun in der gewünschten Drehrichtung zu drehen. In den Figuren 3 und 4 sind für das Starten zwei positive Netzhalbwellen vorgesehen. Es können auch mehr oder weniger solcher Netzhalbwellen für das Starten verwendet werden.

Ab einem Zeitpunkt t2 wird das Beschleunigen (Hochlaufen) des Rotors 8 auf Synchrondrehzahl durch Zünden des Schalters 3 in aufeinanderfolgenden positiven und negativen Halbwellen eingeleitet. Jeweils wenn der Schalter 3 gesperrt ist, der Strom durch die Statorwicklung 1 also Null ist, wird die sich durch den aufgrund seiner Trägheit weiterdrehenden Rotor 8 in die Statorwicklung 1 induzierte Spannung E (EMK) von der Steuerelektronik 5 gemessen. In den Figuren 3 und 4 ist die EMK E punktiert durchgehend angedeutet. Messen läßt sie sich nur, wenn der Schalter 3 gesperrt ist. In Figur 4 ist, um dies zu verdeutlichen, die an der Statorwicklung 1 abfallende, meßbare Spannung Um gezeigt. Ersichtlich entspricht diese bei leitendem Schalter 3 der Netzspannung und bei gesperrtem Schalter 3 der induzierten Spannung E.

Die Steuerelektronik 5 erfaßt im stromlosen Zustand der Statorwicklung 1 die induzierte Spannung E und die Polarität der Netzhalbwellen. Haben bzw. erreichen die induzierte Spannung E und die Netzspannung U gleiches Vorzeichen, dann wird der Schalter 3 von der Steuerelektronik 5 leitend geschaltet, so daß die Statorwicklung 1 entsprechend strombeaufschlagt wird. Dies ist bei den Diagrammen nach den Figuren 3,4 in den Einschaltzeitpunkten t3 bis t8 der Fall. Beim jeweils nächsten Nulldurchgang des Stroms sperrt der Schalter 3 wieder. Es ergibt sich daraus, daß in aufeinanderfolgenden Halbwellen beider Polaritäten überwiegend ein Drehmoment in der richtigen Drehrichtung des Motors 2 entsteht. Um die motorbedingte Phasenverschiebung zwischen Strom und Spannung zu berücksichtigen, kann die Steuerelektronik die Steigung der induzierten Spannung erfassen und dem Schalter voreilend schalten. Es läßt sich dadurch das Hochlaufen des Rotors vergleichmäßigen.

Ist der Rotor 8 auf Synchrondrehzahl hochgelaufen, was in den Figuren 3 und 4 etwa nach dem Zeitpunkt t9 der Fall ist, dann kann die Steuerelektronik 5 durch die Auswertung der induzierten Spannung E (EMK) den Betrieb auf maximalen Wirkungsgrad optimieren. Hierzu mißt sie die induzierte Spannung E in den stromlosen Zeiten der Statorwicklung 1 und errechnet daraus die Phasenlage der induzierten Spannung E. Die Steuerung des Schalters 3 erfolgt dann so, daß die Grundwelle des Motorstroms I dieselbe Phasenlage annimmt, wie die induzierte Spannung.

In der Steuerelektronik 5 können Kenndaten des Motors 2 und der anzutreibenden Last gespeichert sein. Über die Stromimpulsdauer, die bei hohem Wirkungsgrad eingestellt wird, kann der jeweilige Belastungszustand des Motors 2 erkannt werden. Es lassen sich damit durch die beschriebene Messung der EMK des Motors 2 auch Störzustände, beispielsweise falsche Drehrichtung oder Laufen ohne Last oder Blockieren des Motors 2 erfassen.

Blockiert beispielsweise eine vom Motor 2 anzutreibende Pumpe eines Haushaltsgeräts, wie Spülmaschine oder Waschmaschine, dann ist im stromlosen Zustand der Statorwicklung 1 keine induzierte Spannung meßbar, weil der Rotor 8 nicht weiterdreht, obwohl dies die Steuerelektronik 5 an sich erwartet. Die Steuerelektronik 5 kann hierauf zur Behebung der Störung besondere Maßnahmen einleiten. Beispielsweise kann sie ein Aggregat kurzzeitig aktivieren, das der Drehrichtungsumkehr der Pumpe dient, um deren Blockierung zu beseitigen. Es ist auch möglich, daß die Steuerelektronik 5, wenn sie eine Blockierung der Pumpe erfaßt, einen Neustart der Pumpe aktiviert.

Ähnlich kann die Steuerelektronik 5, wenn sie ein Leerlaufen der Pumpe erfaßt, das sich auf die im stromlosen Zustand meßbare induzierte Spannung auswirkt, ein Abschalten des Motors 2 und/oder die Aktivierung eines anderen Aggregats, das dem Leerlaufen entgegenwirkt - beispielsweise Wasser nachfüllen -, aktiviert.

Auch bei einer Überlast des Motors 2 ist eine ungewöhnliche Änderung der im stromlosen Zustand gemessenen induzierten Spannung gegeben. Die Steuerelektronik 5 kann hierauf in der beschriebenen Weise dadurch reagieren, daß sie den Motor 2 stoppt und/oder ein anderes Aggregat der Maschine aktiviert, was dieser Störung entgegenwirkt.

## Patentansprüche

1. Vorrichtung zum Steuern des Anlaufs und des Betriebs eines nicht selbstanlaufenden Einphasen-Synchronmotors, dessen mindestens eine Statorwicklung über einen von einer Steuerelektronik gesteuerten Schalter an die Wechselspannung eines Netzes schaltbar ist,
**dadurch gekennzeichnet,**
**daß** die Steuerelektronik (5) wenigstens die jeweilige Polarität der Wechselspannung (4) und im stromlosen Zustand der Statorwicklung (1) die bei trägheitsbedingt nachlaufendem Rotor (8) des Motors (2) in die Statorwicklung (1) induzierte Spannung (EMK) erfaßt,
**daß** die Steuerelektronik (5) zum Erreichen einer definierten Startposition des Rotors (8) über den Schalter (3) einen oder mehrere Spannungspulse der einen Polarität der Wechselspannung (4) an die Statorwicklung (1) legt,
**daß** die Steuerelektronik (5) zum Anlauf des Rotors (8) über den Schalter (3) einen oder mehrere Spannungspulse der anderen Polarität der Wechselspannung (4) an die Statorwicklung (1) legt und
**daß** die Steuerelektronik (5) zum Hochlauf des Rotors (8) auf Synchrondrehzahl den Schalter (3) jeweils dann schließt, wenn die erfaßte induzierte Spannung und die jeweilige Netzspannungshalbwelle in einem derartigen Verhältnis stehen, daß ein Drehmoment in der gewünschten Drehrichtung entsteht.

2. Vorrichtung nach Anspruch 1,
**dadurch gekennzeichnet,**
**daß** die Steuerelektronik (5) zum Hochlauf des Rotors (8) auf Synchrondrehzahl den Schalter (3) jeweils dann schließt, wenn die erfaßte induzierte Spannung und die jeweilige Netzspannungshalbwelle gleiche Polarität haben.

3. Vorrichtung nach Anspruch 1 oder 2,
**dadurch gekennzeichnet,**
**daß** die Steuerelektronik (5) zum Hochlauf des Rotors (8) auf Synchrondrehzahl den Schalter (3) jeweils dann schließt, wenn die Steigung der induzierten Spannung bezogen auf die jeweilige Netzspannungshalbwelle derart ist, daß ein Drehmoment in der gewünschten Drehrichtung entsteht.

4. Vorrichtung nach einem der vorhergehenden Ansprüche,
**dadurch gekennzeichnet,**
**daß** Ständerpole (9,10) derart gestaltet sind, daß sie Ruhepositionen (a,b) des Rotors (8) bewirken.

5. Vorrichtung nach einem der vorhergehenden Ansprüche,
**dadurch gekennzeichnet,**
**daß** die Steuerelektronik (5) im Synchronlauf des Motors (2) diesen durch Erfassen der induzierten Spannung auf maximalen Wirkungsgrad optimiert.

6. Vorrichtung nach einem der vorhergehenden Ansprüche,
**dadurch gekennzeichnet,**
**daß** die Steuerelektronik (5) aus den sich im Synchronlauf ergebenden Strompulsen und/oder der gemessenen EMK den Belastungszustand des Motors (2) ermittelt und hierauf reagierende Maßnahmen einleitet.

7. Vorrichtung nach einem der vorhergehenden Ansprüche, wobei der Motor (2) eine Pumpe einer Haushaltsmaschine antreibt,
**dadurch gekennzeichnet,**
**daß** dann, wenn infolge einer Blockierung der Pumpe die erwartete induzierte Spannung nicht auftritt, die Steuerelektronik (5) über ein zur Drehrichtungsumkehr der Pumpe vorgesehenes Aggregat eine kurzzeitige Drehrichtungsumkehr der Pumpe einleitet und/oder einen Neustart des Motors (2) einleitet.

8. Vorrichtung nach einem der vorhergehenden Ansprüche,
**dadurch gekennzeichnet,**
**daß** die Steuerelektronik (5) einen Leerlauf und/oder eine Überlast des Motors (2) über die ändernde induzierte, im stromlosen Zustand der Statorwicklung (1) gemessene Spannung erfaßt und entgegenwirkende Steuerungsmaßnahmen ausführt.

## Claims

1. Apparatus for controlling the starting and operation of a non-self-starting single-phase synchronous motor, at least one stator winding of which can be connected to the alternating voltage of a network by way of a switch controlled by an electronic control mechanism,
**characterized in that**
the electronic control mechanism (5) detects at least the actual polarity of the alternating voltage (4) and, in the no-current state of the stator winding (1), the voltage (e.m.f.) induced in the stator winding (1) when the rotor (8) of the motor (2) follows on subject to inertia,
**in that**, for achieving a specific starting position of the rotor (8), the electronic control mechanism (5) applies, by way of switch (3), one or more voltage pulses of one polarity of the alternating voltage (4) to the stator winding (1),
**in that**, for starting the rotor (8), the electronic control mechanism (5) applies, by way of switch (3), one or more voltage pulses of the other polarity of the alternating voltage (4) to the stator winding (1) and
**in that**, for the run-up of the rotor (8) to synchronous speed, the electronic control mechanism (5) closes the switch (3) when the detected induced voltage and the actual mains voltage half-wave are at such a ratio that a torque is produced in the desired direction of rotation.

2. Apparatus according to Claim 1,
**characterized in that**,
for the run-up of the rotor (8) to synchronous speed, the electronic control mechanism (5) closes the switch (3) when the detected induced voltage and the actual mains voltage half-wave have the same polarity.

3. Apparatus according to Claim 1 or 2,
**characterized in that**,
for the run-up of the rotor (8) to synchronous speed, the electronic control mechanism (5) closes the switch (3) when the rise in the induced voltage in relation to the actual mains voltage half-wave is such that a torque is produced in the desired direction of rotation.

4. Apparatus according to one of the preceding claims,
**characterized in that**
the stator poles (9, 10) are configured in such a way that they produce resting positions (a, b) of the rotor (8).

5. Apparatus according to one of the preceding claims,
**characterized in that**,
in the synchronous running of the motor (2), the electronic control mechanism (5) optimises this in respect of maximum efficiency by detecting the induced voltage.

6. Apparatus according to one of the preceding claims,
**characterized in that**,
from the current pulses occurring in the synchronous running and/or from the measured e.m.f., the electronic control mechanism (5) determines the load condition of the motor (2) and initiates measures in response to this.

7. Apparatus according to one of the preceding claims, in which the motor (2) drives a pump of a household appliance,
**characterized in that**
when, as a result of a blockage of the pump, the expected induced voltage does not occur, the electronic control mechanism (5), by way of a unit provided for reversing the direction of rotation of the pump, initiates a brief reversal of the direction of rotation of the pump and/or a restarting of the motor (2).

8. Apparatus according to one of the preceding claims,
**characterized in that**
the electronic control mechanism (5) detects idling and/or overloading of the motor (2) by way of the fluctuating induced voltage measured in the no-current state of the stator winding (1) and takes counteracting control measures.

## Revendications

1. Dispositif pour commander le démarrage et le fonctionnement d'un moteur synchrone monophasé, ne démarrant pas automatiquement, dont au moins un enroulement de stator peut être connecté à la tension alternative d'un réseau, par un interrupteur commandé par une électronique de commande, **caractérisé en ce que** l'électronique de commande (5) détecte au moins la polarité de la tension alternative (4) et, à l'état non parcouru par un courant de l'enroulement de stator (1), la tension (force électromotrice) induite dans l'enroulement de stator (1) lorsque le rotor (8) du moteur (2) continue de tourner par inertie, **en ce que**, pour atteindre une position de démarrage défini du rotor (8), l'électronique de commande (5) applique à l'enroulement de stator (1), par l'intermédiaire de l'interrupteur (3), une ou plusieurs impulsions de tension d'une polarité de la tension alternative (4), **en ce que**, pour le démarrage du rotor (8), l'électronique de commande (5) applique, par l'interrupteur (3), une ou plusieurs impulsions de tension de l'autre polarité de la tension alternative (4) à l'enroulement de stator (1), et **en ce que** pour faire monter la vitesse du rotor (8) à la vitesse de rotation synchrone, l'électronique de commande (5) ferme l'interrupteur (3) chaque fois que la tension induite détectée et la demi-onde de la tension de réseau respective se trouvent dans un rapport tel qu'il en résulte un couple de rotation dans le sens de rotation voulu.

2. Dispositif selon la revendication 1, **caractérisé en ce que** pour faire monter la vitesse du rotor (8) à la vitesse de rotation synchrone, l'électronique de commande (5) ferme l'interrupteur (3) chaque fois que la tension induite détectée et la demi-onde respective de la tension de réseau ont la même polarité.

3. Dispositif selon la revendication 1 ou 2, **caractérisé en ce que** pour faire monter la vitesse du rotor (8) à la vitesse de rotation synchrone, l'électronique de commande (5) ferme l'interrupteur (3) chaque fois que la pente de la tension induite par rapport à la demi-onde respective de la tension de réseau, est telle qu'il en résulte un couple de rotation dans le sens de rotation voulu.

4. Dispositif selon l'une des revendications précédentes, **caractérisé en ce que** des pôles (9, 10) du stator sont tels qu'ils provoquent des positions de repos (a, b) du rotor (8).

5. Dispositif selon l'une des revendications précédentes, **caractérisé en ce que** pendant la marche synchrone du moteur (2), l'électronique de commande (5) optimise celui-ci sur un rendement maximal, par détection de la tension induite.

6. Dispositif selon l'une des revendications précédentes, **caractérisé en ce que** l'électronique de commande (5) détermine l'état de charge du moteur (2), à partir des impulsions de courant que l'on obtient en marche synchrone et/ou de la force électromotrice mesurée, et déclenche des moyens réagissant à ceci.

7. Dispositif selon l'une des revendications précédentes, dans lequel le moteur (2) entraîne une pompe d'un appareil électroménager, **caractérisé en ce que** si la tension induite attendue ne se produit pas par suite d'un blocage de la pompe, l'électronique de commande (5) amorce une inversion de courte durée du sens de rotation de la pompe, au moyen d'un groupe prévu pour l'inversion du sens de rotation de la pompe, et/ou amorce un redémarrage du moteur (2).

8. Dispositif selon l'une des revendications précédentes, **caractérisé en ce que** l'électronique de commande (5) détecte une marche à vide et/ou une surcharge du moteur (2), à travers la tension induite variable, mesurée à l'état non parcouru par un courant de l'enroulement de stator (1), et exécute des moyens de commande d'action contraire.
